# EUROPÄISCHE PATENTANMELDUNG

(11) **EP 1 583 198 A2**
(43) Veröffentlichungstag der Anmeldung: **05.10.2005**
(21) Anmeldenummer: 05101978.4
(22) Anmeldetag: 14.03.2005
(51) Int. Cl.: H02H 9/00, H02P 1/58

(54) **Transportable netzgespeiste Elektrowerkzeugmaschine**

(30) Priorität: 29.03.2004 DE 102004015193
(71) Anmelder: HILTI Aktiengesellschaft, 9494 Schaan (LI)
(72) Erfinder: Studer, Georg, 6712 Thüringen (AT)
(74) Vertreter: Wildi, Roland

(57) **Zusammenfassung**

Eine transportable netzgespeiste Elektrowerkzeugmaschine (1) zum Antrieb eines Werkzeugs (2) mit einem antreibenden Elektromotor (3), in dessen, von einem mit einem Sicherungselement (4) eines zulässigen Nennstromes (I_{N}) abgesicherten Stromversorgungsnetz (5) speisbaren, Leistungsstromzweig (6) eine elektronische Motorsteuerung (7) zur Steuerung des aufgenommenen Stroms (I) angeordnet ist, die einen Stromsensor (8) zur Messung des Stroms (I) im Leistungsstromzweig (6) aufweist, wobei die Motorsteuerung (7) einen Zeitgeber (9) zur Messung einer Zeitspanne (Δt) und ein Strombegrenzungsmodul (10) aufweist, welches den Strom (I) in Abhängigkeit einer in der Zeitspanne (Δt) zurückliegend gemessenen Stromgeschichte durch eine vom Strombegrenzungsmodul (10) bestimmte Stromgrenze (S) beschränkt.

## Beschreibung

Die Erfindung bezeichnet eine transportable netzgespeiste Elektrowerkzeugmaschine, insbesondere für das Baugewerbe.

Gerade im Baugewerbe werden leistungsstarke transportable Elektrowerkzeugmaschinen benötigt, bspw. Steinsägen, Kernbohrkronen, Bohrhämmer usw., deren Stromversorgung aus dem lokalen Stromversorgungsnetz oder von einem dezentralen Stromversorgungsgenerator erfolgt. Das auf eine Nennbelastung ausgelegte Stromversorgungsnetz ist aus Sicherheitsgründen mit Sicherungselementen, üblicherweise mit zeitlich trägen Schmelzsicherungen, je Hauptstromzweig auf bestimmte standardisierte Nennströme abgesichert, bspw. 16A, 25A, 32A, 64A, 120A, ... Dadurch ist das verfügbare Stromversorgungsnetz oft nicht derart stark ausgelegt, um Elektrowerkzeugmaschinen mit stark schwankender Netzlast, wie sie bspw. bei kurzzeitigen Werkzeugblockaden vorkommen, den Spitzenstrom dauerhaft zur Verfügung zu stellen.

Damit derartige Schmelzsicherungen nicht überlastet werden, sind moderne Elektrowerkzeugmaschinen mit elektronischer Motorsteuerung elektronisch auf die Begrenzung des Motorstromes innerhalb der standardisierten Nennströme ausgelegt.

Nach der DE3009090 weist eine Phasenanschnittsteuerung für einen Elektromotor eine Einschaltstrombegrenzung auf, die den Spitzenstrom zuverlässig unter einen konstruktiv vorwählbaren Nennstrom beschränkt. Bei leistungsstarken Elektrowerkzeugmaschinen beschränkt diese Strombegrenzung insbesondere in niederstromig abgesicherten Stromzweigen die Nutzleistung der Elektrowerkzeugmaschine.

Zudem sind nach der DE19852115 die Schaltzeiten der Schmelzsicherungen durch nichtlineare Strom-Zeit-Kennlinien bestimmt, insbesondere ist bei kurzfristigen Spitzenzeiten unterhalb einer Sekunde ein mehrfach höherer Spitzenstrom möglich, als es dem für Dauerstrom bemessenen Nennstrom der Schmelzsicherung entspricht.

Die Aufgabe der Erfindung besteht in der Realisierung einer transportablen netzgespeisten Elektrowerkzeugmaschine, die in schwach abgesicherten Stromversorgungsnetzen leistungsstark ist.

Die Aufgabe wird im Wesentlichen durch die Merkmale des Anspruchs 1 gelöst. Vorteilhafte Weiterbildungen ergeben sich aus den Unteransprüchen.

So weist eine transportable netzgespeiste Elektrowerkzeugmaschine zum Antrieb eines Werkzeugs einen antreibenden Elektromotor auf, in dessen, von einem mit Sicherungselementen eines zulässigen Nennstromes abgesicherten Stromversorgungsnetz speisbaren, Leistungsstromzweig eine elektronische Motorsteuerung zur Steuerung des aufgenommenen Stroms angeordnet ist, die einen Stromsensor zur Messung des Stroms im Leistungsstromzweig, einen Zeitgeber zur Messung einer Zeitspanne und ein Strombegrenzungsmodul aufweist, welches den Strom in Abhängigkeit einer in der Zeitspanne zurückliegend gemessenen Stromgeschichte durch eine vom Strombegrenzungsmodul bestimmte Stromgrenze beschränkt.

Die Stromgeschichte selbst ist die Funktion der Stromwerte über den Zeitpunkten in der Geschichte. Durch die Beschränkung des Stroms durch die Motorsteuerung in Abhängigkeit der Stromgeschichte stellen kurzzeitige Stromspitzen und längere Dauerströme unterschiedliche Parameter des Strombegrenzungsmoduls dar, die unterschiedliche Auswirkungen auf die Stromgrenze haben. Da bei Sicherungselementen die zulässigen Ströme bei kurzzeitigen Stromspitzen höher als bei längeren Dauerströmen sind, können die kurzzeitigen Stromspitzen höher als der Nennstrom der Sicherungselemente sein, ohne diese den Leistungsstromzweig unterbrechen zu lassen. Dadurch stehen die kurzzeitigen Stromspitzen für einen plötzlichen Leistungsbedarf der Elektrowerkzeugmaschine zur Verfügung.

Im zugeordneten Steuerverfahren einer Motorsteuerung zur Steuerung des von einem antreibenden Elektromotor aufgenommenen Stroms wird in einem ersten Schritt zumindest quasikontinuierlich der Strom im Leistungsstromzweig gemessen und als Stromgeschichte gespeichert, in einem zweiten Schritt wird von dem Strombegrenzungsmodul aus der während einer zurückliegenden Zeitspanne gespeicherten Stromgeschichte eine Stromgrenze bestimmt, die in einem dritten Schritt der Motorsteuerung als obere Schranke des von dem antreibenden Elektromotor zukünftig aufnehmbaren Stroms dient.

Vorteilhaft beinhaltet das Strombegrenzungsmodul einen Algorithmus zur zumindest annähernden Bestimmung einer mathematischen Faltung des Stroms mit der Strom-Zeit-Kennlinie des Sicherungselements, wodurch die aktuelle Beanspruchung des Sicherungselementes und weiter eine Stromgrenze exakt ermittelbar ist. Da sich die normierte Beanspruchung des Sicherungselementes zeitlich integral über den Quotienten aus dem Strommittel in der Geschichte und der Strom-Zeit-Kennlinie des Sicherungselementes ergibt, stellt der Integralkern einen Faltungsterm aus dem Strom und der Kennlinie dar, wodurch die gesamte Geschichte in die Beanspruchung des Sicherungselementes eingehen. Unter der Annahme einer ähnlichen Stromzukunft ist exakt eine Stromgrenze bestimmbar, die sich aus dem momentanen Strom dividiert durch die normierte Beanspruchung ergibt.

Vorteilhaft entspricht die vom Strombegrenzungsmodul bestimmte Stromgrenze einem vorgegebenen Nennstrom, der mit einem von einer Zeitspanne abhängigen Spitzenwertfaktor, vorzugsweise grössergleich Eins, und einem Reservefaktor, vorzugsweise kleinergleich Eins, multipliziert wird, wobei sich der Reservefaktor aus der Differenz eines über eine zurückliegenden Zeitspanne gemittelten, normierten Stroms zu Eins ergibt. Da eine Mittlung über eine Zeitspanne einem Spektralwert im der Zeitspanne zugeordneten Frequenzbereich entspricht sowie eine Faltung im Zeitbereich in eine Multiplikation im Frequenzbereich transformierbar ist, stellt die Berechnungsmethode eine Nährung für eine mathematische Faltung dar, die einfach in einem Algorithmus eines Mikrocontrollers integrierbar ist.

Vorteilhaft entspricht die vom Strombegrenzungsmodul bestimmte Stromgrenze dem Minimum einer Vielzahl mit verschiedenen Zeitspannen bestimmten Stromgrenzen, wodurch die Strom-Zeit-Kennlinie des Sicherungselementes über mehrere verschiedene Frequenzbereiche an verschiedenen Stellen gestützt ist.

Vorteilhaft liegt der Spitzenwertfaktor für eine Zeitspanne kleinergleich 1.0 Sekunden im Bereich zwischen 3.0 und 10, für eine Zeitspanne von 10 Sekunden im Bereich zwischen 2.0 und 5.0 und für eine Zeitspanne grössergleich 100 Sekunden bei 1.0, wodurch die C-Charakteristik einer in Baustromversorgungsnetzen üblichen trägen Schmelzsicherung optimal abgebildet wird.

Vorteilhaft beinhaltet das Strombegrenzungsmodul ein Wertespeicherarray zur Ablage von den Stromgrenzen zugeordneten Funktionswerten, wodurch die vom Strombegrenzungsmodul ansonsten durchzuführende Berechnung schneller über im Wertespeicherarray abgelegte Stützstellenwerte erfolgt.

Vorteilhaft ist ein Nennstromwahlschalter zur Auswahl des Nennstromes mit dem Strombegrenzungsmodul steuerbar verbunden, wodurch aus verschiedenen standardisierten Nennströmen der dem speisenden abgesicherten Stromversorgungsnetz entsprechende Nennstrom wahlfrei schaltbar ist, wodurch die Elektrowerkzeugmaschine an verschiedenen Stromversorgungsnetzen bei hoher Beanspruchung leistungsstark betreibbar ist, ohne das jeweilige Sicherungselement dieses Stromversorgungsnetzes auszulösen.

Vorteilhaft ist der Nennstromwahlschalter vor unbeabsichtigter Betätigung geschützt ausgeführt, insbesondere als ein nur mit Hilfsmitteln wie einem Schraubendreher bedienbarer Drehwahlschalter, wodurch insbesondere bei Elektrohandwerkzeugmaschinen bei zweckentsprechender Benutzung ein versehentliches Betätigen des Nennstromwahlschalters verhindert wird.

Die Erfindung wird bezüglich eines vorteilhaften Ausführungsbeispiels näher erläutert mit:
- Fig. 1: als Elektrowerkzeugmaschine
- Fig. 2: als Algorithmus
- Fig. 3: als Strom-Zeit-Kennlinie

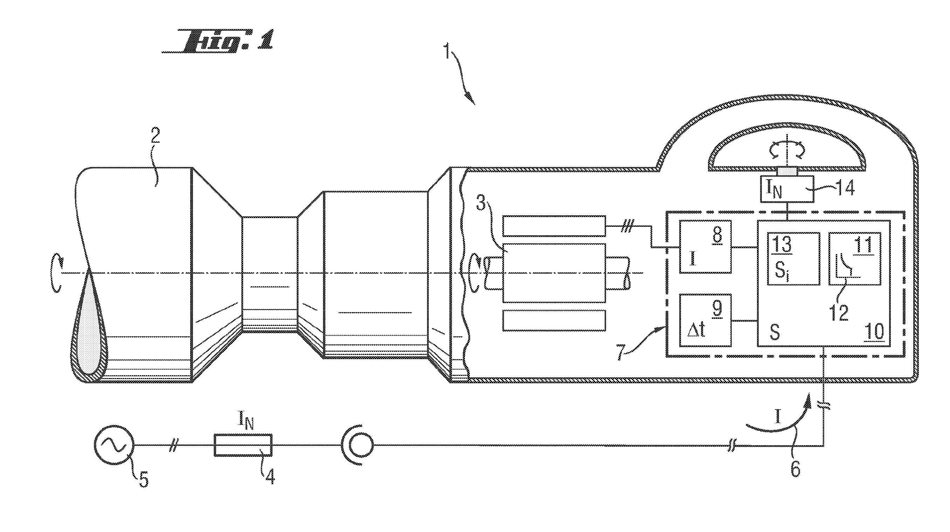

Nach Fig. 1 weist eine als Diamantbohrkronenantrieb ausgebildete, transportable netzgespeiste Elektrohandwerkzeugmaschine 1 zum Antrieb eines Werkzeugs 2 in Form einer Diamantbohrkrone einen antreibenden Elektromotor 3 auf, in dessen, von einem mit einem Sicherungselement 4 eines zulässigen Nennstromes I_{N} abgesicherten Stromversorgungsnetz 5 gespeisten, Leistungsstromzweig 6 eine elektronische Motorsteuerung 7 zur Steuerung des aufgenommenen Stroms I angeordnet ist. Die Motorsteuerung 7 weist einen Stromsensor 8 zur Messung des Stroms I im Leistungsstromzweig 6, einen Zeitgeber 9 zur Messung einer Zeitspanne Δt und ein Strombegrenzungsmodul 10 auf, welches den Strom I in Abhängigkeit einer in der Zeitspanne Δt zurückliegend gemessenen Stromgeschichte durch eine vom Strombegrenzungsmodul 10 bestimmte Stromgrenze S beschränkt. Das Strombegrenzungsmodul 10 beinhaltet einen Algorithmus 11 für eine Nährung zur Bestimmung einer mathematischen Faltung des Stroms I mit der Strom-Zeit-Kennlinie 12 des Sicherungselementes 4 und ein Wertespeicherarray 13 zur Ablage von den Stromgrenzen Sᵢ zugeordneten Funktionswerten. Ein als geschützter Drehwahlschalter ausgeführter Nennstromwahlschalter 14 ist zur Auswahl des Nennstromes I_{N} mit dem Strombegrenzungsmodul 10 steuerbar verbunden.

Nach dem in Fig. 2 dargestellten Algorithmus 11 des Mikrocontrollers wird die Stromgrenze S aus dem Minimum einer Vielzahl i mit verschiedenen Zeitspannen ΔTᵢ bestimmten Stromgrenzen Sᵢ berechnet. Jede Stromgrenze Sᵢ wird multiplikativ aus einem vorgegebenen Nennstrom I_{N} , einem von einer Zeitspanne Δtᵢ abhängigen Spitzenwertfaktor Aᵢ grössergleich Eins und einem Reservefaktor Bᵢ kleinergleich Eins bestimmt, wobei sich der Reservefaktor Bᵢ jeweils aus der Differenz eines über eine zurückliegende Zeitspanne Δtᵢ gemittelten, normierten Stroms <I>ᵢ zu Eins ergibt.

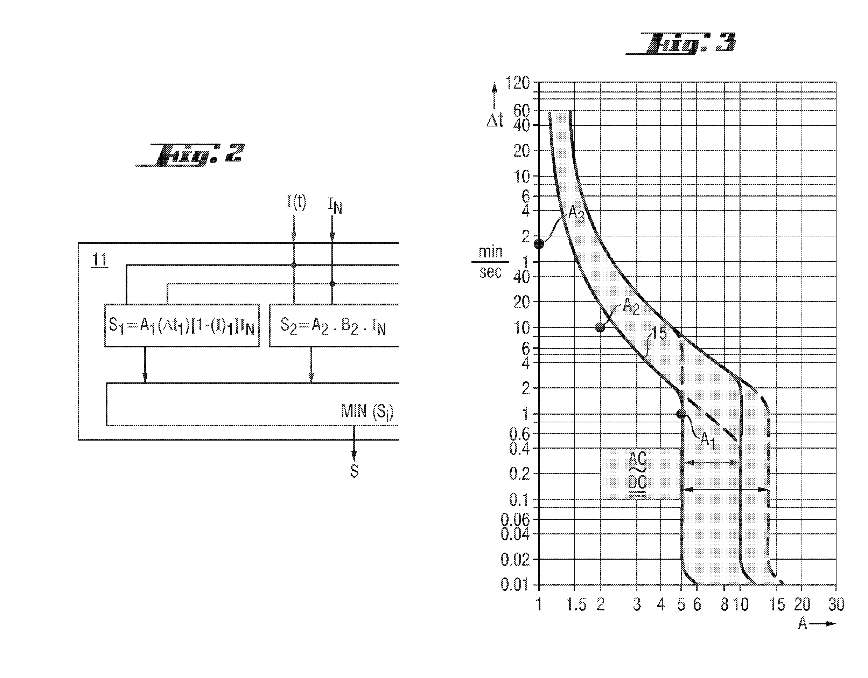

Nach Fig. 3 liegen für eine Zeitspanne Δt₁ von 1.0 Sekunden bei 5.0, für eine Zeitspanne Δt₂ von 10 Sekunden bei 2.0 und für eine Zeitspanne Δt₃ von 100 Sekunden bei 1.0 drei Stützstellen des Spitzenwertfaktors Aᵢ auf der sicheren Seite sowie nahe der C-förmigen Schmelzkennlinie 15 einer üblichen trägen Schmelzsicherung.

## Patentansprüche

1. Transportable netzgespeiste Elektrowerkzeugmaschine zum Antrieb eines Werkzeugs (2) mit einem antreibenden Elektromotor (3), in dessen, von einem mit einem Sicherungselement (4) eines zulässigen Nennstromes (I_{N}) abgesicherten Stromversorgungsnetz (5) speisbaren, Leistungsstromzweig (6) eine elektronische Motorsteuerung (7) zur Steuerung des aufgenommenen Stroms (I) angeordnet ist, die einen Stromsensor (8) zur Messung des Stroms (I) im Leistungsstromzweig (6) aufweist, **dadurch gekennzeichnet, dass** die Motorsteuerung (7) einen Zeitgeber (9) zur Messung einer Zeitspanne (Δt) und ein Strombegrenzungsmodul (10) aufweist, welches den Strom (I) in Abhängigkeit einer in der Zeitspanne (Δt) zurückliegend gemessenen Stromgeschichte durch eine vom Strombegrenzungsmodul (10) bestimmte Stromgrenze (S) beschränkt.

2. Elektrowerkzeugmaschine nach Anspruch 1, **dadurch gekennzeichnet, dass** das Strombegrenzungsmodul (10) einen Algorithmus (11) zur zumindest annähernden Bestimmung einer mathematischen Faltung des Stroms (I) mit der Strom-Zeit-Kennlinie (12) des Sicherungselements (4) beinhaltet.

3. Elektrowerkzeugmaschine nach Anspruch 1 oder 2, **dadurch gekennzeichnet, dass** die vom Strombegrenzungsmodul (10) bestimmte Stromgrenze (S) einem vorgegebenen Nennstrom (I_{N}) entspricht, der mit einem von einer Zeitspanne (Δt) abhängigen Spitzenwertfaktor (A) und einem Reservefaktor (B) multipliziert wird, wobei sich der Reservefaktor (B) aus der Differenz eines über eine zurückliegenden Zeitspanne (Δt) gemittelten, normierten Stroms (< I >) zu Eins ergibt.

4. Elektrowerkzeugmaschine nach Anspruch 3, **dadurch gekennzeichnet, dass** die vom Strombegrenzungsmodul (10) bestimmte Stromgrenze (S) dem Minimum einer Vielzahl mit verschiedenen Zeitspannen (Δtᵢ) bestimmten Stromgrenzen (Sᵢ) entspricht.

5. Elektrowerkzeugmaschine nach Anspruch 4, **dadurch gekennzeichnet, dass** der Spitzenwertfaktor für eine Zeitspanne (Δt) kleinergleich 1.0 Sekunden im Bereich zwischen 3.0 und 10, für eine Zeitspanne (Δt) von 10 Sekunden im Bereich zwischen 2.0 und 5.0 und für eine Zeitspanne (Δt) grössergleich 100 Sekunden bei 1.0 liegt.

6. Elektrowerkzeugmaschine nach einem der vorherigen Ansprüche, **dadurch gekennzeichnet, dass** das Strombegrenzungsmodul (10) ein Wertespeicherarray (13) zur Ablage von den Stromgrenzen (S) zugeordneten Funktionswerten beinhaltet.

7. Elektrowerkzeugmaschine nach einem der vorherigen Ansprüche, **dadurch gekennzeichnet, dass** ein Nennstromwahlschalter (14) zur Auswahl des Nennstromes (I_{N}) mit dem Strombegrenzungsmodul (10) steuerbar verbunden ist.

8. Elektrowerkzeugmaschine nach Anspruch 4, **dadurch gekennzeichnet, dass** der Nennstromwahlschalter (14) vor unbeabsichtigter Betätigung geschützt ausgeführt ist.

9. Steuerverfahren für eine Elektrowerkzeugmaschine (1) nach einem der vorherigen Ansprüche mit einer Motorsteuerung (7) zur Steuerung des von einem antreibenden Elektromotor (3) aufgenommenen Stroms (I), **dadurch gekennzeichnet, dass** in einem ersten Schritt zumindest quasikontinuierlich der Strom (I) im Leistungsstromzweig (6) gemessen und als Stromgeschichte gespeichert wird, in einem zweiten Schritt von dem Strombegrenzungsmodul (10) aus der während einer zurückliegenden Zeitspanne (Δt) gespeicherten Stromgeschichte eine Stromgrenze (S) bestimmt wird, die in einem dritten Schritt der Motorsteuerung (7) als obere Schranke des von dem antreibenden Elektromotor (3) zukünftig aufnehmbaren Stroms (I) dient.
